# EUROPEAN PATENT APPLICATION

(11) **EP 4 819 246 A1**
(43) Date of publication of application: **07.10.2026**
(21) Application number: 25909638.6
(22) Date of filing: 26.12.2025
(51) Int. Cl.: H01M 4/587

(54) **BATTERY CELL, BATTERY DEVICE, ENERGY STORAGE DEVICE, ENERGY STORAGE SYSTEM AND ELECTRIC DEVICE**

(30) Priority: 24.01.2025 CN 202510117678
(71) Applicant: Contemporary Amperex Technology Co., Limited, Ningde, Fujian 352100 (CN)
(72) Inventor: ZHAO, Yuzhen, Ningde, Fujian 352100 (CN); XU, Shoujiang, Ningde, Fujian 352100 (CN); WEI, Xichen, Ningde, Fujian 352100 (CN); XUE, Junpeng, Ningde, Fujian 352100 (CN); NIU, Songlin, Ningde, Fujian 352100 (CN)
(74) Representative: Lorenz Seidler Gossel Part. mbB
(86) International application number: PCT/CN2025/145959
(87) International publication number: WO 2026/157773

(57) **Abstract**

The present application relates to the field of battery technologies, and in particular, to a battery cell, a battery apparatus, an energy storage apparatus, an energy storage system, and a power consuming apparatus. The present application provides a battery cell, including an electrode assembly. The electrode assembly includes a positive electrode sheet, a negative electrode sheet, and a separator. The negative electrode sheet includes a negative electrode current collector and a negative electrode material layer disposed on at least one side of the negative electrode current collector. The negative electrode material layer includes a negative electrode active material. The negative electrode active material includes amorphous carbon-coated graphite. The amorphous carbon-coated graphite includes a graphite core and an amorphous carbon coating layer on a surface of the graphite core, where an interplanar spacing of (002) crystal planes of the amorphous carbon is D1, an interplanar spacing of (002) crystal planes of the graphite core is D2, and 1.0 < D1/D2 ≤ 1.1. The positive electrode sheet includes a positive electrode current collector and a positive electrode material layer disposed on at least one side of the positive electrode current collector. The positive electrode material layer includes a positive electrode active material. The positive electrode active material includes a carbon-coated lithium iron phosphate material. In a Raman spectrum of the carbon-coated lithium iron phosphate material, Id/Ig ≤ 1.5.

## Description

### CROSS-REFERENCE TO RELATED APPLICATIONS

The present application is based on and claims priority to CN Application No. 202510117678.6, field on January 24, 2025, the content of which is incorporated herein by reference in its entirety.

### TECHNICAL FIELD

The present application relates to the field of battery technologies, and in particular, to a battery cell, a battery apparatus, an energy storage apparatus, an energy storage system, and a power consuming apparatus.

### BACKGROUND

An energy storage battery is a core device of an energy storage system, which mainly uses chemical reactions for energy storage. Energy storage requires a large-capacity, long-cycle, high-safety, and high-energy efficiency battery structure. Currently, the market has an increasingly high requirement on the life of energy storage products.

### SUMMARY

To solve the problem in the cycle life of a battery cell, a first embodiment of the present application provides a battery cell, including an electrode assembly. The electrode assembly includes a positive electrode sheet, a negative electrode sheet, and a separator. The negative electrode sheet includes a negative electrode current collector and a negative electrode material layer disposed on at least one side of the negative electrode current collector. The negative electrode material layer includes a negative electrode active material. The negative electrode active material includes amorphous carbon-coated graphite. The amorphous carbon-coated graphite includes a graphite core and an amorphous carbon coating layer on a surface of the graphite core, where an interplanar spacing of (002) crystal planes of the amorphous carbon is D1, an interplanar spacing of (002) crystal planes of the graphite core is D2, and D1 and D2 satisfy 1.0 < D1/D2 ≤1.1. The positive electrode sheet includes a positive electrode current collector and a positive electrode material layer disposed on at least one side of the positive electrode current collector. The positive electrode material layer includes a positive electrode active material. The positive electrode active material includes a carbon-coated lithium iron phosphate material. In a Raman spectrum of the carbon-coated lithium iron phosphate material, the ratio of a peak intensity Id of a D peak to a peak intensity Ig of a G peak satisfies Id/Ig ≤ 1.5.

The battery cell of the present application includes the amorphous carbon-coated graphite in the negative electrode sheet. An amorphous carbon layer is formed on the surface of a graphite particle. A carbon material of a two-layer structure is obtained by coating the surface of a high-graphitized graphite material with low-graphitized amorphous carbon. On the one hand, this enables the high-graphitized graphite to possess a high discharge capacity while having good rate performance.

The interplanar spacing of the amorphous carbon material is greater than that of the graphite, so that the diffusion performance of lithium ions therein can be improved. This is equivalent to forming a lithium ion buffering layer on the outer surface of the graphite, thereby improving the large-current charge and discharge performance of the graphite material. Meanwhile, by controlling a difference between the interplanar spacing of the amorphous carbon and the interplanar spacing of the graphite core, that is, controlling D1/D2 ≤ 1.1, the resistance of deintercalating lithium ions from the amorphous carbon coating layer can be reduced. On the other hand, the amorphous carbon is in contact with a solvent, preventing graphite layer peeling caused by co-intercalation of solvent molecules, thereby expanding a selection range for an electrolyte solution system and improving the cycling stability of the electrode material.

The degree of regularity of the amorphous carbon-coated graphite may be represented by the ratio of the interplanar spacing D1 of the (002) crystal planes of the amorphous carbon to the interplanar spacing D2 of the (002) crystal planes of the graphite core. D1/D2 being within a particular range can ensure the stability of an interplanar structure of the graphite, and can reduce the diffusion resistance on lithium ions, facilitating intercalation and deintercalation of lithium ions during charging and discharging. In addition, the battery cell of the present application includes the carbon-coated lithium iron phosphate material in the positive electrode sheet. The carbon coating can effectively improve electronic contact on the surface of the lithium iron phosphate material, improving the electronic conductivity of the material, and thereby improving the rate performance and the cycling performance of the material. When the degree of graphitization of the carbon coating layer is relatively high, the electrical connectivity of the carbon-coated lithium iron phosphate material can be further improved, and a reaction between the carbon coating layer and an electrolyte solution can be prevented.

Therefore, when both the negative electrode active material and the positive electrode active material are introduced into a battery, on one hand, active lithium consumption during battery cycling is reduced, and on the other hand, the kinetic performance of the battery is improved. This can collaboratively reduce the active lithium consumption and electrochemical polarization of the battery, thereby improving the cycle life.

In some embodiments, the battery cell according to claim 1, where in the Raman spectrum of the carbon-coated lithium iron phosphate material, the ratio of the peak intensity Id of the D peak to the peak intensity Ig of the G peak satisfies 0.9 ≤ Id/Ig ≤ 1.3.

In some embodiments, the negative electrode material layer includes a first negative electrode material layer and a second negative electrode material layer. The first negative electrode material layer is disposed on at least one side of the negative electrode current collector. The second negative electrode material layer is disposed on a side of the first negative electrode material layer that is away from the negative electrode current collector. The ratio of a thickness t2 of the second negative electrode material layer to a thickness t1 of the first negative electrode material layer satisfies 2/3 ≤ t2/t1 ≤ 1.5; and/or a porosity of the second negative electrode material layer is greater than a porosity of the first negative electrode material layer.

In some embodiments, the thickness t1 of the first negative electrode material layer and the thickness t2 of the second negative electrode material layer are each independently selected from 57 µm to 87 µm; and/or the porosity of the first negative electrode material layer and the porosity of the second negative electrode material layer are each independently selected from 25% to 36%.

In some embodiments, the lithium iron phosphate material includes one or more doping elements selected from Ti, V, Mg, Zr, and Y.

In some embodiments, in the positive electrode sheet, a coating areal density of the positive electrode sheet is 19.4 mg/cm² to 26.7 mg/cm². In some embodiments, a compaction density of the positive electrode material layer is 2.38 g/cm³ to 2.70 g/cm³.

In some embodiments, the battery cell further includes an electrolyte solution, the electrolyte solution including a solvent, and the solvent including cyclic carbonate. In some embodiments, the solvent includes ethylene carbonate (EC), and optionally, a mass of the ethylene carbonate accounts for 15% to 25% of a mass of the electrolyte solution. In some embodiments, the solvent includes propylene carbonate (PC), and optionally, a mass of the propylene carbonate accounts for 1% to 8% of the mass of the electrolyte solution.

A second embodiment of the present application provides a battery apparatus, including a plurality of battery cells according to the first embodiment of the present application.

A third embodiment of the present application provides an energy storage apparatus, including a plurality of battery cells according to the first embodiment of the present application or a plurality of battery apparatuses according to the second embodiment of the present application, where the battery cell or the battery apparatus is configured to store or supply electric energy.

A fourth embodiment of the present application provides an energy storage system, including a power conversion apparatus and the energy storage apparatus according to the third embodiment of the present application, where the power conversion apparatus is configured to electrically connect a power generation apparatus and the energy storage apparatus.

A fifth embodiment of the present application provides a power consuming apparatus, including the battery cell according to the first embodiment of the present application, the battery apparatus according to the second embodiment of the present application, the energy storage apparatus according to the third embodiment of the present application, or the energy storage system according to the fourth embodiment of the present application, where the battery cell or the battery apparatus is configured to store or supply electric energy.

### BRIEF DESCRIPTION OF THE DRAWINGS

To describe the technical solutions in the examples of the present application more clearly, the accompanying drawings required for describing the examples of the present application will be described briefly below. Apparently, the accompanying drawings described below show only some examples of the present application, and other drawings can be obtained by a person of ordinary skill in the art from the accompanying drawings without creative efforts.
FIG. 1 is a schematic diagram of a battery cell according to an embodiment of the present application;
FIG. 2 is an exploded view of the battery cell shown in FIG. 1 according to an embodiment of the present application;
FIG. 3 is a schematic diagram of a battery module according to an embodiment of the present application;
FIG. 4 is a schematic diagram of a battery pack according to an embodiment of the present application;
FIG. 5 is an exploded view of the battery pack shown in FIG. 5 according to an embodiment of the present application; and
FIG. 6 is a schematic diagram of a power consuming apparatus using a battery cell as a power source according to an embodiment of the present application.

In the drawings, the drawings are not drawn in an actual proportion.

Descriptions of reference numerals:
1. battery pack; 2. upper box body; 3. lower box body; 4. battery module; 5. battery cell; 51. case; 52. electrode assembly; and 53. end cover.

### DETAILED DESCRIPTION

The embodiments of the present application will be further described in detail with reference to the drawings and examples. Detailed descriptions of the following examples and the accompanying drawings are used for exemplarily illustrating the principle of the present application, rather than being used for limiting the protection scope of the present application. In other words, the present application is not limited to the described examples.

Hereinafter, embodiments of a negative electrode active material and a preparation method therefor, a positive electrode sheet, a negative electrode sheet, a secondary battery, a battery module, a battery pack, and a power consuming apparatus of the present application are specifically disclosed in the detailed descriptions with reference to the accompanying drawings as appropriate. However, there will be cases in which unnecessary detailed explanations are omitted. For example, there are cases in which detailed descriptions of well-known matters and repeated descriptions of actually identical structures are omitted. Thus, the following description does not become unnecessarily lengthy, which facilitates the easy comprehension of a person skilled in the art. In addition, the accompanying drawings and the following explanations are provided for a person skilled in the art to fully understand the present application and are not intended to limit the subject matter recited in the claims.

A "range" disclosed in the present application is defined in the form of a lower limit and an upper limit. A given range is defined by selecting a lower limit and an upper limit, and the selected lower limit and upper limit define boundaries of a particular range. The range defined in this way may include or may not include end values, and may be arbitrarily combined, that is, any lower limit may be combined with any upper limit to form a new range. For example, if ranges 60 to 120 and 80 to 110 are listed for a specific parameter, it is to be understood that the ranges of 60 to 110 and 80 to 120 are also contemplated. In addition, if the minimum range values 1 and 2 and the maximum range values 3, 4 and 5 are listed, the following ranges are all contemplated: 1 to 3, 1 to 4, 1 to 5, 2 to 3, 2 to 4, and 2 to 5. In the present application, unless otherwise specified, the numerical range "a to b" represents the abbreviated representation of any combination of real numbers between a and b, where both a and b are real numbers. For example, the numerical range "0 to 5" represents that all real numbers between "0 and 5" are listed herein, and "0 to 5" is merely an abbreviated representation of the combination of these numbers. In addition, when a parameter is expressed as an integer ≥2, it is equivalent to disclosing that the parameter is, for example, an integer such as 2, 3, 4, 5, 6, 7, 8, 9, 10, 11, 12.

Unless otherwise specially specified, all the embodiments and optional embodiments of the present application can be combined with each other to form new technical solutions.

Unless otherwise specified, all technical features and optional technical features of the present application can be combined with each other to form new technical solutions.

Unless otherwise specified, all the steps of the present application may be performed sequentially or randomly, and preferably be performed sequentially. For example, the method includes steps (a) and (b), meaning that the method may include steps (a) and (b) performed sequentially, or may include steps (b) and (a) performed sequentially. For example, the method mentioned may further include step (c), meaning that step (c) can be added to the method in any order. For example, the method may include steps (a), (b), and (c), may include steps (a), (c), and (b), may include steps (c), (a), and (b), or the like.

Unless otherwise specified, the terms "include/including" and "comprise/comprising" mentioned in the present application are open-ended. For example, the "including" and "comprising" may represent that other components not listed may be further included or comprised.

Unless otherwise specified, the term "or" is inclusive in the present application. For example, the condition "A or B" is satisfied under any one of the following conditions: A is true (or present) and B is false (or absent); A is false (or absent) and B is true (or present); or both A and B are true (or present).

### [Battery cell]

In the examples of the present application, the battery cell may be a secondary battery. The secondary battery refers to a battery cell in which the active material can be activated by means of charging for further use after the battery cell is discharged.

The battery cell may be a lithium-ion battery, a sodium-lithium ion battery, a magnesium-ion battery, or the like, which is not limited in the examples of the present application.

Generally, the secondary battery includes a positive electrode sheet, a negative electrode sheet, a separator, and an electrolyte solution. During charging and discharging of the battery, active ions (for example, lithium ions) are intercalated and deintercalated back and forth between the positive electrode sheet and the negative electrode sheet. The separator is disposed between the positive electrode sheet and the negative electrode sheet, and mainly functions to prevent short circuit between a positive electrode and a negative electrode and allow active ions to pass through. The electrolyte solution mainly functions to conduct active ions between the positive electrode sheet and the negative electrode sheet.

To solve the problem in the cycle life of a battery cell, a first embodiment of the present application provides a battery cell, including an electrode assembly. The electrode assembly includes a positive electrode sheet, a negative electrode sheet, and a separator. The negative electrode sheet includes a negative electrode current collector and a negative electrode material layer disposed on at least one side of the negative electrode current collector. The negative electrode material layer includes a negative electrode active material. The negative electrode active material includes amorphous carbon-coated graphite. The amorphous carbon-coated graphite includes a graphite core and an amorphous carbon coating layer on a surface of the graphite core, where an interplanar spacing of (002) crystal planes of the amorphous carbon is D1, an interplanar spacing of (002) crystal planes of the graphite core is D2, and D1 and D2 satisfy 1.0 < D1/D2 ≤1.1. The positive electrode sheet includes a positive electrode current collector and a positive electrode material layer disposed on at least one side of the positive electrode current collector. The positive electrode material layer includes a positive electrode active material. The positive electrode active material includes a carbon-coated lithium iron phosphate material. In a Raman spectrum of the carbon-coated lithium iron phosphate material, the ratio of a peak intensity Id of a D peak to a peak intensity Ig of a G peak satisfies Id/Ig ≤ 1.5.

The battery cell of the present application includes the amorphous carbon-coated graphite in the negative electrode sheet. An amorphous carbon layer is formed on the surface of a graphite particle. A carbon material of a two-layer structure is obtained by coating the surface of a high-graphitized graphite material with low-graphitized amorphous carbon. On the one hand, this enables the high-graphitized graphite to possess a high discharge capacity while having good rate performance.

The interplanar spacing of the amorphous carbon material is greater than that of the graphite, so that the diffusion performance of lithium ions therein can be improved. This is equivalent to forming a lithium ion buffering layer on the outer surface of the graphite, thereby improving the large-current charge and discharge performance of the graphite material. Meanwhile, by controlling a difference between the interplanar spacing of the amorphous carbon and the interplanar spacing of the graphite core, that is, controlling D1/D2 ≤ 1.1, the resistance of deintercalating lithium ions from the amorphous carbon coating layer can be reduced. On the other hand, the amorphous carbon is in contact with a solvent, preventing graphite layer peeling caused by co-intercalation of solvent molecules, thereby expanding a selection range for an electrolyte solution system and improving the cycling stability of the electrode material.

The degree of regularity of the amorphous carbon-coated graphite may be represented by the ratio of the interplanar spacing D1 of the (002) crystal planes of the amorphous carbon to the interplanar spacing D2 of the (002) crystal planes of the graphite core. D1/D2 being within a particular range can ensure the stability of an interplanar structure of the graphite, and can reduce the diffusion resistance on lithium ions, facilitating intercalation and deintercalation of lithium ions during charging and discharging.

The interplanar spacing of the (002) crystal planes of the amorphous carbon coating layer and the interplanar spacing of the (002) crystal planes of the graphite core may be measured by using a transmission electron microscope. The coating layer is randomly measured three times, to take an average value and denote it as D1. The graphite core is randomly measured three times, to take an average value and denote it as D2. The ratio of D1/D2 is calculated.

The amorphous carbon-coated graphite may be prepared by using an existing method. An exemplary preparation method includes: mixing a graphite powder with a binder (for example, pitch) to cover a surface of the graphite powder with the binder, then adding an amorphous carbon powder, and kneading a resulting mixture to soften the binder, so that the amorphous carbon powder is dispersed and stable in the binder; next, performing thermal treatment at a high temperature and in a non-oxidizing atmosphere to decompose and carbonize the binder, thereby obtaining the amorphous carbon-coated graphite. Before and after the preparation, the interplanar spacing D1 of the (002) crystal planes of the amorphous carbon and the interplanar spacing D2 of the (002) crystal planes of the graphite core hardly change. Therefore, D1 and D2 may be controlled.

In addition, the battery cell of the present application includes the carbon-coated lithium iron phosphate material in the positive electrode sheet. The carbon coating can effectively improve electronic contact on the surface of the lithium iron phosphate material, improving the electronic conductivity of the material, and thereby improving the rate performance and the cycling performance of the material. When the degree of graphitization of the carbon coating layer is relatively high, the electrical connectivity of the carbon-coated lithium iron phosphate material can be further improved, and a reaction between the carbon coating layer and an electrolyte solution can be prevented.

The degree of graphitization of the carbon coating layer on the surface of the lithium iron phosphate may be characterized by the Raman spectrum. The D peak and the G peak of the Raman spectrum are characteristic peaks of a carbon atom crystal, and are respectively near 1360±5 cm⁻¹ and 1580±5 cm⁻¹. The D peak represents a defect of the carbon atom crystal, and is inversely proportional to the degree of ordering of a carbon structure. The G peak represents in-plane stretching vibration of sp² hybridized carbon atoms, which represents the degree of graphitization of the carbon structure. The degree of graphitization of the carbon coating layer may be reflected by the ratio of intensities between the D peak and the G peak of the Raman.

In the Raman spectrum of the carbon-coated lithium iron phosphate, when the ratio of the peak intensity Id of the D peak to the peak intensity Ig of the G peak satisfies Id/Ig ≤ 1.5, the degree of graphitization of the carbon coating layer on the surface of the lithium iron phosphate is relatively high, resulting in good conductivity, so that the kinetic performance of the battery cell can be improved.

Therefore, when both the negative electrode active material and the positive electrode active material are introduced into a battery, on one hand, active lithium consumption during battery cycling is reduced, and on the other hand, the kinetic performance of the battery is improved. This can collaboratively reduce the active lithium consumption and electrochemical polarization of the battery, thereby improving the cycle life.

In some embodiments, in the amorphous carbon-coated graphite included in the negative electrode sheet, the interplanar spacing D1 of the (002) crystal planes of the amorphous carbon is 0.345 nm to 0.376 nm.

In some embodiments, in the amorphous carbon-coated graphite included in the negative electrode sheet, the interplanar spacing D2 of the (002) crystal planes of the graphite core is 0.342 nm.

In some embodiments, D1/D2 satisfies 1.0 < D1/D2 ≤ 1.01, 1.01 < D1/D2 ≤ 1.03, 1.03 < D1/D2 ≤ 1.06, 1.06 < D1/D2 ≤ 1.08, or 1.08 < D1/D2 ≤ 1.10.

In some embodiments, Id/Ig satisfies 0.6 ≤ Id/Ig ≤ 1.5, for example, 0.6 ≤ Id/Ig ≤ 0. 9, 0.9 ≤ Id/Ig ≤ 1.1, 1.1 ≤ Id/Ig ≤ 1.3, or 1.3 ≤ Id/Ig ≤ 1.5.

In some embodiments, Id/Ig satisfies 0.9 ≤ Id/Ig ≤ 1.3. Id/Ig being within the range described above indicates a good balance between the carbon defect and the carbon graphitization.

Reference may be made to the standard GB/T 40219-2021, in which a LabRAM HRP Evolution laser Raman micro-spectrometer is used to obtain a Raman spectrum of a material, where a solid-state laser with a wave length of 523 nm is used as a light source, a beam diameter is 1.2 µm, and power is 1 mW. A measurement mode is macro Raman. A CCD detector is used.

A lithium iron phosphate active material powder is pressed to obtain a pellet. Three points are randomly selected from the pellet for testing, and three sets of measurement values are obtained for calculating an average value.

### [Negative electrode sheet]

A negative electrode sheet includes a negative electrode current collector and a negative electrode material layer disposed on at least one surface of the negative electrode current collector. The negative electrode material layer includes a negative electrode active material.

As an example, the negative electrode current collector has two surfaces opposite to each other in a thickness direction of the negative electrode current collector, and the negative electrode material layer is disposed on either or both of the two opposite surfaces of the negative electrode current collector.

In some embodiments, the negative electrode material layer includes a first negative electrode material layer and a second negative electrode material layer. The first negative electrode material layer is disposed on at least one side of the negative electrode current collector. The second negative electrode material layer is disposed on a side of the first negative electrode material layer that is away from the negative electrode current collector. The ratio of a thickness t2 of the second negative electrode material layer to a thickness t1 of the first negative electrode material layer satisfies 2/3 ≤ t2/t1 ≤ 1.5; and/or in some embodiments, a porosity of the second negative electrode material layer is greater than a porosity of the first negative electrode material layer.

In some embodiments, the porosities of the first negative electrode material layer and the second negative electrode material layer may be adjusted by adjusting formulas of coating slurries of the two layers. For example, the coating slurry of the second negative electrode material layer may be made to have higher conductive carbon content and lower graphite content than the coating slurry of the first negative electrode material layer. After the coating is cold-pressed, a compaction density of the second negative electrode material layer is slightly lower than that of the first negative electrode material layer, so that the second negative electrode material layer has a higher porosity.

In some embodiments, the ratio of the thickness t2 of the second negative electrode material layer to the thickness t1 of the first negative electrode material layer satisfies 2/3 ≤ t2/t1 ≤ 1 or 1 ≤ t2/t1 ≤ 1.5.

In some embodiments, the thickness t1 of the first negative electrode material layer and the thickness t2 of the second negative electrode material layer are each independently selected from 57 µm to 87 µm, for example, 57 µm to 60 µm, 60 µm to 65 µm, 65 µm to 70 µm, 70 µm to 72 µm, 72 µm to 80 µm, or 80 µm to 87 µm.

In some embodiments, the porosity of the first negative electrode material layer and the porosity of the second negative electrode material layer are each independently selected from 25% to 36%, for example, 25% to 26%, 26% to 28%, 28% to 30%, 30% to 32%, or 32% to 36%.

An interface resistance of a single-layer coating is greater than that of a multi-layer coating. The negative electrode uses a plurality of negative electrode material layers. On the one hand, this can reduce a binder content in a formula of each layer, thereby reducing an interface resistance. On the other hand, this can improve binder distribution uniformity in the electrode sheet, thereby improving a current density.

The design of stepped porosity distribution with the porosities increasing from top to bottom better facilitates sufficient infiltration of the electrolyte solution. Since the electrolyte solution functions to conduct lithium ions, this facilitates the speeding-up of ion conduction on a surface of the negative electrode, finally improving the kinetics of the battery cell and improving the cycle life.

The thickness of the first negative electrode material layer and the thickness of the second negative electrode material layer may be measured with reference to the following method:

A cut surface of the negative electrode sheet is formed, and the negative electrode sheet is observed with a tomographic SEM, where an obvious boundary line between two coating layers can be seen. Using the boundary line as a baseline, a thickness from the boundary line to a surface of the current collector is measured, which is a thickness of a first active layer. A thickness from the boundary line to an upper surface of the electrode sheet is measured, which is a thickness of a second active layer.

A porosity of the negative electrode sheet may be measured with reference to the following method:
A cut surface of the negative electrode sheet is formed, and a two-layer coating structure of the negative electrode sheet is observed with a tomographic SEM. A cut surface SEM image in a field of view is randomly shot, so that the image includes the entire first active layer and second active layer. A total area S1 of the first active layer and a total area R1 occupied by a first active material in the first active layer are measured, and a porosity of the first active layer is defined as being = (1-R1/S1) × 100%. A total area S2 of the second active layer and a total area R2 occupied by a second active material in the second active layer are measured, and a porosity of the second active layer is defined as being = (1-R2/S2) × 100%.

In some embodiments, the negative electrode current collector may be made of metal foil or a composite current collector. For example, in the case of the metal foil, copper foil may be used. The composite current collector may include a polymer material base layer or a metal layer formed on at least one surface of a polymer material substrate. The composite current collector may be formed by forming a metal material (copper, copper alloy, nickel, nickel alloy, titanium, titanium alloy, silver, silver alloy, and the like) on the polymer material substrate (such as a substrate of polypropylene (PP), polyethylene terephthalate (PET), polybutylene terephthalate (PBT), polystyrene (PS), and polyethylene (PE)).

In some embodiments, the negative electrode material layer further optionally includes a binder. As an example, the binder may be at least one selected from styrenebutadiene rubber (SBR), polyacrylic acid (PAA), sodium polyacrylate (PAAS), polyacrylamide (PAM), polyvinyl alcohol (PVA), sodium alginate (SA), polymethylacrylic acid (PMAA), and carboxymethyl chitosan (CMCS).

In some embodiments, the negative electrode material layer further optionally includes a conductive agent. As an example, the conductive agent may be at least one selected from superconducting carbon, acetylene black, carbon black, Ketjen black, carbon dots, carbon nanotubes, graphene, and carbon nanofibers.

In some embodiments, the negative electrode material layer further optionally includes another additive such as a thickener (for example, sodium carboxymethyl cellulose (CMC-Na)).

In some embodiments, the negative electrode sheet may be prepared by: dispersing the foregoing components for preparing the negative electrode sheet, for example, the negative electrode active material, the conductive agent, the binder, and any other components, in a solvent (for example, deionized water) to form negative electrode slurry; applying the negative electrode slurry onto the negative electrode current collector, followed by drying, cold pressing, and other processes, to obtain the negative electrode sheet.

### [Positive electrode sheet]

In some embodiments, the positive electrode may be a positive electrode sheet, and the positive electrode sheet may include a positive electrode current collector and a positive electrode material layer disposed on at least one surface of the positive electrode current collector. As an example, the positive electrode current collector has two opposite surfaces in a thickness direction of the positive electrode current collector, and the positive electrode active material is disposed on either or both of the two opposite surfaces of the positive electrode current collector.

As an example, the positive electrode current collector may be made of metal foil, a conductive polymer material, a carbon material, or a composite current collector. For example, in the case of the metal foil, pure metal, alloy, or metal subjected to surface treatment may be used, including, but not limited to, stainless steel, copper, aluminum, nickel, titanium, silver, or the like. The composite current collector may include a polymer material base layer and a metal layer. The composite current collector may be formed by forming a metal material (aluminum, aluminum alloy, nickel, nickel alloy, titanium, titanium alloy, silver and silver alloy, etc.) on a polymer material substrate (such as polypropylene, polyethylene terephthalate, polybutylene terephthalate, polystyrene, and polyethylene).

In some embodiments, the carbon-coated lithium iron phosphate material that is included in the positive electrode active material includes one or more doping elements selected from Ti, V, Mg, Zr, and Y. In some embodiments, the lithium iron phosphate includes one or more doping elements selected from Ti and V. The use of the lithium iron phosphate doped with the foregoing elements can lower a lithium-ion transport barrier and improve a lithium-ion diffusion rate, thereby improving the kinetic performance of the battery and improving the cycling performance. Compared with doping with other elements, doping with each of the two elements, Ti and V, has better performance of improving lithium ion diffusion.

In some embodiments, a mass percentage of the doping element in the lithium iron phosphate material is 0.02% to 0.4% (for example, 0.02% to 0.1%, 0.1% to 0.2%, and 0. 2% to 0.3% or 0.3% to 0.4%).

In some embodiments, the carbon-coated lithium iron phosphate material includes one or more of carbon-coated LiFePO₄, carbon-coated LiFe_{1-y}Ti_{y/2}PO₄, and carbon-coated LiFe₁₋ₓV_{x/2}PO₄, where x is 0.0005 to 0.013, and y is 0.0006 to 0.014. In some embodiments, the carbon-coated lithium iron phosphate material includes one or more of carbon-coated LiFePO₄, carbon-coated LiFe_{0.992}Ti_{0.004}PO₄, and carbon-coated LiFe_{0.994}V_{0.003}PO₄. In some embodiments, the positive electrode active material may alternatively include a positive electrode active material which is known in the art for the lithium-ion battery. The positive electrode active material may include at least one of the following materials: lithium-containing phosphate, lithium transition metal oxide, and respective modified compounds thereof. However, the present application is not limited to such materials, and another conventional material that can be used as the positive electrode active material for the battery may alternatively be used. These positive electrode active materials may be used alone or in combination of two or more thereof. An example of the lithium-containing phosphate may include, but is not limited to, at least one of lithium iron phosphate (for example, LiFePO₄, which may be referred to as LFP for short), a composite material of lithium iron phosphate and carbon, lithium manganese phosphate (for example, LiMnPO₄), a composite material of lithium manganese phosphate and carbon, lithium iron manganese phosphate, and a composite material of lithium manganese iron phosphate and carbon. An example of the lithium transition metal oxide may include, but is not limited to, at least one of lithium cobalt oxide (for example, LiCoO₂), lithium nickel oxide (for example, LiNiO₂), lithium manganese oxide (for example, LiMnO₂ or LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂, which may be referred to as NCM₃₃₃ for short, LiNi_{0.5}Co_{0.2}Mn_{0.3}O₂, which may be referred to as NCM₅₂₃ for short, LiNi_{0.5}Co_{0.25}Mn_{0.25}O₂, which may be referred to as NCM₂₁₁ for short, LiNi_{0.6}Co_{0.2}Mn_{0.2}O₂, which may be referred to as NCM₆₂₂ for short, and LiNi_{0.8}Co_{0.1}Mn_{0.1}O₂, which may be referred to as NCM₈₁₁ for short), lithium nickel cobalt aluminum oxide (for example, LiNi_{0.85}Co_{0.05}Al_{0.05}O₂), and respective modified compounds thereof. The modified compound refers to a substance obtained based on the foregoing substance through modification means such as doping or coating.

In the examples of the positive electrode active material in the present application, a molar content of oxygen is just a theoretical state value. Lattice oxygen release causes changes in the molar content of oxygen, and an actual molar content of oxygen fluctuates.

In some embodiments, in the positive electrode sheet, a coating areal density of the positive electrode sheet is 19.4 mg/cm² to 26.7 mg/cm². With the foregoing areal density, the requirement of a high energy density of the battery cell can be satisfied, while the kinetic performance of the battery cell can be maintained, thereby ensuring the life of the battery cell. Therefore, with the foregoing areal density, a balance between the energy density and the performance of the battery cell may be considered. An energy storage battery has relatively high requirements on the energy density and the life. With the foregoing areal density, when a high energy density is obtained, a transport path of lithium ions is not easy to increase, and the kinetic performance of the battery can be maintained, so that the battery has both a relatively high energy density and a relatively long life.

In some embodiments, the coating areal density of the positive electrode sheet is 19.4 mg/cm² to 19.5 mg/cm², 19.5 mg/cm² to 21.0 mg/cm², 21.0 mg/cm² to 22.1 mg/cm², 22.1 mg/cm² to 24.0 mg/cm², 24.0 mg/cm² to 26.6 mg/cm², or 26.6 mg/cm² to 26.7 mg/cm².

The coating areal density of the positive electrode sheet is a weight of a positive electrode material applied on a current collector of a unit area. A method for measuring the coating areal density of the positive electrode sheet is as follows: taking a double side-coated positive electrode sheet with a size of 2 cm × 2 cm, and measuring a weight of the double side-coated positive electrode sheet, which is denoted as M0 mg; then obtaining a positive electrode current collector with a size of 2 cm × 2 cm by scraping off a positive electrode material layer, and measuring a weight of the positive electrode current collector, which is denoted as M1 mg, in which case a coating areal density of the positive electrode material layer = (M0-M1)/2/4.

In some embodiments, the positive electrode material layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylic resin.

In some embodiments, the positive electrode material layer further optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode sheet may be prepared in the following manner: dispersing the foregoing components for preparing the positive electrode sheet, for example, the positive electrode active material, the conductive agent, the binder, and any other components, in a solvent (for example, N-methylpyrrolidone) to form a positive electrode slurry; and applying the positive electrode slurry onto the positive electrode current collector, followed by drying, cold pressing, and other processes, to obtain the positive electrode sheet.

In some embodiments, a compaction density of the positive electrode material layer is 2.38 g/cm³ to 2.70 g/cm³. With the compaction density of the positive electrode material layer being within the foregoing range, the requirement of a high energy density of the battery cell can be satisfied, while cracks or even fractures due to excessively large extension of the positive electrode current collector that affect a manufacturing yield and the reliability performance of the battery cell can be avoided. Therefore, the compaction density of the positive electrode material layer being within the foregoing range may facilitate the satisfaction of the requirements of the energy density, the reliability, and the manufacturability of the battery cell.

In some embodiments, the compaction density of the positive electrode material layer is 2.38 g/cm³ to 2.40 g/cm³, 2.40 g/cm³ to 2.50 g/cm³, or 2.50 g/cm³ to 2.70 g/cm³.

The compaction density of the positive electrode material layer is a weight of a positive electrode active substance on an electrode sheet of a unit volume, and a method for measuring it is as follows:
taking a double side-coated positive electrode sheet with a size of 2 cm × 2 cm, measuring a weight of the double side-coated positive electrode sheet, which is denoted as M0 mg, and measuring a thickness of the double side-coated positive electrode sheet, which is denoted as T0 cm; then obtaining a positive electrode current collector with a size of 2 cm × 2 cm by scraping off a positive electrode material layer, measuring a weight of the positive electrode current collector, which is denoted as M1 mg, and measuring a thickness of the positive electrode current collector, which is denoted as T1 cm. In this case, a coating areal density of the positive electrode sheet = (M0-M1)/2/4, and a thickness of the positive electrode material layer = T0-T1; and a compaction density of the positive electrode material layer = coating areal density of the positive electrode sheet/thickness of the positive electrode material layer

### [Electrolyte]

The electrolyte is used to conduct ions between the positive electrode sheet and the negative electrode sheet. The type of the electrolyte is not specifically limited in the present application, and may be selected as needed. For example, the electrolyte may be liquid, gelled or all solid.

In some embodiments, the battery cell further includes an electrolyte solution, the electrolyte solution including a solvent, and the solvent including cyclic carbonate.

In some embodiments, the electrolyte solution includes ethylene carbonate (EC). In some embodiments, a mass of the ethylene carbonate accounts for 15% to 25% (for example, 15% to 18%, 18% to 20%, or 20% to 25%) of a mass of the electrolyte solution. The ethylene carbonate has a relatively high dielectric constant and a good lithium salt dissolution electrolysis capability. Adding the ethylene carbonate within the foregoing mass percentage range, on one hand, allows to take full advantage of the relatively high dielectric constant and the good lithium salt dissolution electrolysis capability thereof. On the other hand, it allows to avoid excessive addition which leads to a relatively large viscosity of the electrolyte solution and thus affects the conductivity of the electrolyte solution, maintaining rapid migration of lithium ions, and avoiding an increase in the battery polarization, which is beneficial to maintaining the battery life.

In some embodiments, the electrolyte solution includes propylene carbonate (PC). In some embodiments, a mass of the propylene carbonate accounts for 1% to 8% (for example, 1% to 2%, 2% to 4%, 4% to 5%, or 5% to 8%) of the mass of the electrolyte solution. The propylene carbonate can improve a lithium salt disassociation capability. Adding the propylene carbonate within the foregoing mass percentage range, on one hand, allows to improve the lithium salt disassociation and lower a low-temperature solidifying point of the electrolyte solution, improving low-temperature performance of the battery. On the other hand, the propylene carbonate may be compatible with graphite, and after being added, the propylene carbonate is not easy to intercalate into the graphite together with lithium ions on a graphite side of the negative electrode, thereby reducing the probability of graphite peeling, which is beneficial to maintaining the battery life.

In some embodiments, the electrolyte solution further includes a solvent other than cyclic carbonate, including, but not limited to, one or more of chain carbonate, a nitrile solvent, a ketone solvent, and a sulphone solvent, for example, one or more of methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, diethyl sulfone, tetrahydrofuran, ethylene glycol dimethyl ether, dioxolame, acetone, acetonitrile, and butyronitrile.

In some embodiments, electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the electrolyte solution further optionally includes an additive. As an example, the additive may include a negative electrode film-forming additive and a positive electrode film-forming additive, and may further include an additive capable of improving some properties of the battery, for example, an additive capable of improving the overcharging property of the battery, an additive capable of improving the high-temperature or low-temperature property of the battery, and the like.

### [Shell]

The battery cell of the present application may include a shell. The shell may be a steel shell, an aluminum shell, a plastic shell (for example, polypropylene), a composite metal shell (for example, a copper-aluminum composite shell), an aluminum-plastic film, or the like. In some embodiments, the shell may be of a sealed structure, or may be of an unsealed structure. As an example, when the shell is of an unsealed structure, the shell plays a role in protecting an electrode assembly. A sealed bag is further provided between the shell and the electrode assembly. The sealed bag is used to package the electrode assembly and the electrolyte. Specifically, the sealed bag may be a bag-shaped insulating member or an aluminum-plastic film. When the shell is of the sealed structure, the shell is used to package components such as the electrode assembly and the electrolyte.

As an example, the battery cell may be a cylindrical battery cell, a prismatic battery cell, a soft pack battery cell, or a battery cell in another shape. The prismatic battery cell includes a square-shell battery cell, a blade-shaped battery cell, or a polygon prismatic battery. The polygon prismatic battery is, for example, a hexagonal prismatic battery. This is not particularly limited in the present application.

In some embodiments, the shell includes an end cover and a case. The case is provided with an opening. The opening is covered with the end cover. The case may be provided with one or more openings. One or more end covers may be provided.

In some embodiments, the shell is provided with at least one electrode terminal, and the electrode terminal is electrically connected to a tab. The electrode terminal may be directly connected to the tab, or may be indirectly connected to the tab through a current collecting member. The electrode terminal may be disposed on the end cover, or may be disposed on the case.

In some embodiments, the shell is provided with a pressure relief mechanism. The pressure relief mechanism is configured to exhaust a gas inside the battery cell.

As an example, when an internal pressure or temperature of the battery cell reaches a preset threshold, actuation is performed to relieve the internal pressure or temperature. When the internal pressure or temperature of the battery cell reaches a predetermined threshold, the pressure relief mechanism performs an action or a weak structure in the pressure relief mechanism is damaged, to form an opening or a channel available for relieving the internal pressure or temperature. The design of the threshold varies according to different design requirements. The threshold may depend on materials of one or more of the positive electrode sheet, the negative electrode sheet, the electrolyte, and a separation member in the battery cell.

As an example, the pressure relief mechanism may be integrally formed with the shell.

As an example, the pressure relief mechanism may alternatively be disposed separately from and connected to the shell.

"Actuation" mentioned in the present application means that the pressure relief mechanism acts or is activated to a particular state, so that the internal pressure and temperature of the battery cell are relieved. The action generated by the pressure relief mechanism may include, but is not limited to: a component in the pressure relief mechanism moves to form an exhaust channel; at least a portion in the pressure relief mechanism is cracked, broken, torn, or opened, and so on. When the pressure relief mechanism is actuated, high-temperature and high-pressure substances inside the battery cell are discharged as emissions outward from an actuated part. In this way, the pressure and temperature of the battery cell can be relieved with a controllable pressure or temperature, thereby avoiding a potential more serious accident.

In some embodiments, when the shell is of an unsealed structure, the pressure relief mechanism may be configured as a through hole for exhausting the gas inside the battery cell.

The emissions from the battery cell mentioned in the present application include, but are not limited to: the electrolyte, positive and negative electrode sheets that are dissolved or cracked, fragments of the separation member, a high-temperature and high-pressure gas generated by a reaction, a flame, and the like.

### [Separator]

In some embodiments, a secondary battery further includes a separator. The type of the separator is not particularly limited in the present application, and any well-known porous-structure separator with good chemical stability and mechanical stability can be selected.

In some embodiments, a material of the separator may be selected from at least one of glass fiber, non-woven fabric, polyethylene, polypropylene, and polyvinylidene fluoride. The separator may be a single-layer thin film or a multi-layer composite film, and is not particularly limited. When the separator is the multi-layer composite film, materials of layers may be the same or different, and are not particularly limited.

In some embodiments, the positive electrode sheet, the negative electrode sheet, and the separator may be made into an electrode assembly by a winding process or a stacking process.

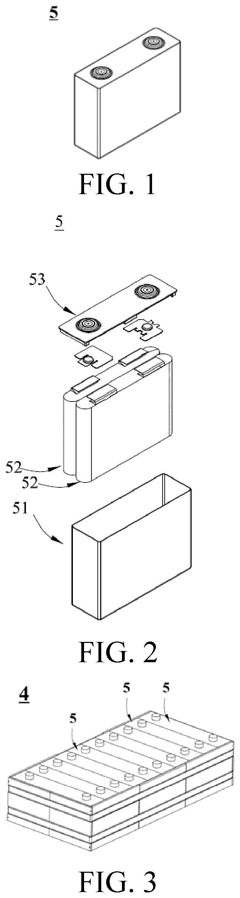

FIG. 1 shows an example battery cell 5 with a cubic structure.

In some embodiments, referring to FIG. 2, the shell may include a case 51 and an end cover 53. The case 51 may include a bottom plate and side plates connected to the bottom plate. The bottom plate and the side plates form an accommodating cavity by enclosure. The case 51 has an opening in communication with the accommodating cavity, and the end cover 53 can cover the opening, to seal the accommodating cavity. The positive electrode sheet, the negative electrode sheet, and the separator may form an electrode assembly 52 by a winding process or a stacking process. The electrode assembly 52 is packaged within the accommodating cavity. An electrolyte solution infiltrates into the electrode assembly 52. The number of electrode assemblies 52 included in the battery cell 5 may be one or more, and may be selected by a person skilled in the art according to actual requirements.

### [Battery apparatus]

The battery apparatus mentioned in the embodiments of the present application may include one or more battery cell assemblies configured to supply a voltage and a capacity. The battery cell assembly may include a plurality of battery cells. The plurality of battery cells are connected in series, in parallel, or in series-parallel through a bus component.

In some embodiments, the battery cell assembly is usually formed by arranging a plurality of battery cells.

As an example, the battery cell assembly may be a battery module. The battery module is an independent module formed by arranging and fixing a plurality of battery cells. As an example, the battery module may be formed by tying the plurality of battery cells through a strap.

FIG. 3 shows an example battery module 4. Referring to FIG. 3, in the battery module 4, a plurality of battery cells 5 may be sequentially arranged in a length direction of the battery module 4. Of course, any other arrangements are also possible. Further, the plurality of battery cells 5 may be fixed through a fastener.

Optionally, the battery module 4 may further include a shell having an accommodating space, and the plurality of battery cells 5 are accommodated in the accommodating space.

In some embodiments, the battery apparatus may be a battery pack. The battery pack includes a box body and one or more battery cell assemblies. The battery cell assemblies are accommodated in the box body.

As an example, the battery cell assembly may be a battery module. The battery cell assembly may be accommodated in the box body by fixing the battery module in the box body.

As an example, the battery cell assembly may alternatively be accommodated in the box body by directly fixing the plurality of battery cells in the box body.

As an example, the box body may include a first box body and a second box body. The first box body and the second box body are snapped to form a sealed space inside the box body for accommodating the battery cell assembly. "Sealed" here means "covered" or "closed", and may be hermetic or may be non-hermetic. The first box body may be a top cover or a bottom plate.

As an example, the box body may include a top cover, a frame, and a bottom plate. The top cover and the bottom plate are connected to the frame to form a sealed space inside the box body for accommodating the battery cell assembly.

In some embodiments, the box body may serve as a portion of a chassis structure of a vehicle. For example, a portion of the box body may become at least part of a floor of the vehicle, or a portion of the box body may become at least part of a transverse beam and a longitudinal beam of the vehicle.

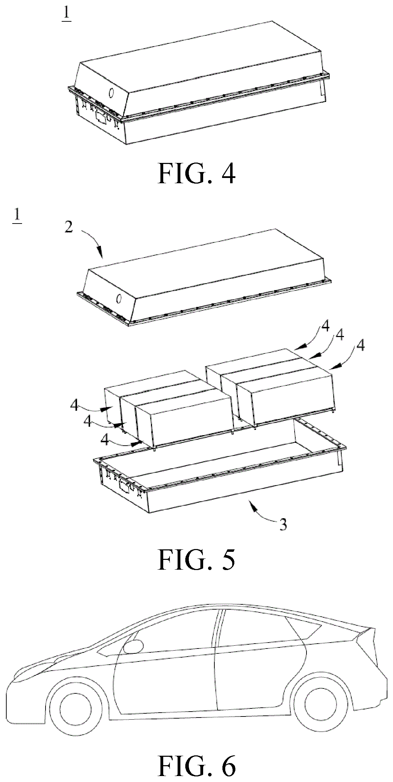

FIG. 4 and FIG. 5 show an example battery pack 1. Referring to FIG. 4 and FIG. 5, the battery pack 1 may include a battery box and a plurality of battery modules 4 disposed in the battery box. The battery box includes an upper box body 2 and a lower box body 3. The upper box body 2 may cover the lower box body 3, and form a sealed space for accommodating the battery module 4. The plurality of battery modules 4 may be arranged in the battery box in any manner.

The technical solutions described in the embodiments of the present application are all applicable to various power consuming apparatuses that use battery cells, for example, a mobile phone, a portable device, a notebook computer, an electric bike, an electric toy, an electric tool, an electric vehicle, a ship, a spacecraft, and the like. For example, the spacecraft includes an airplane, a rocket, a space shuttle, a spaceship, and the like.

FIG. 6 shows an example power consuming apparatus. The power consuming apparatus is a pure electric vehicle, a hybrid electric vehicle, a plug-in hybrid electric vehicle, or the like. To meet the demands of the power consuming apparatus for high power and high energy density of a battery cell, a battery pack or a battery module may be used. [Examples]

Examples of the present application are described below. The examples described below are illustrative, and are only used to explain the present application, but are not construed as limiting the present application. In the examples, specific techniques or conditions are not indicated, and they are performed according to techniques or conditions described in documents in the art or according to the specification of the product. The agents or instruments used for which the manufacturer is not specified are conventional commercially available products.

### Common test methods:

The following parameters are tested according to the methods described above:
in a negative electrode active material, an interplanar spacing D1 of (002) crystal planes of amorphous carbon and an interplanar spacing D2 of (002) crystal planes of a graphite core; the ratio Id/Ig of a peak intensity Id of a D peak to a peak intensity Ig of a G peak in a Raman spectrum of a carbon-coated lithium iron phosphate material; a thickness t2 of a second negative electrode material layer and a thickness t1 of a first negative electrode material layer; a porosity of the second negative electrode material layer and a porosity of the first negative electrode material layer; a coating areal density of a positive electrode material layer; and a compaction density of the positive electrode material layer.

The cycling performance of a battery cell is tested according to the following method:
At 25°C, a cell was placed onto a charge and discharge instrument for a charge and discharge cycle test, where a cycling rate is 0.5P (that is, a charge rate and a discharge rate are both 0.5P), a charge voltage is 2.5 V to 3.65 V, and a capacity retention rate after cycling was calculated. The capacity retention rate after cycling at 25°C is: capacity retention rate after the n-th cycle = (discharge capacity after the n-th cycle/discharge capacity in the first cycle) × 100%.

### Common preparation methods:

### Preparation of a lithium iron phosphate material

0.1 mol of lithium carbonate, 0.2 mol of ferrous oxalate, 0.2 mol of ammonium dihydrogen phosphate powder, and 0.015 mol of glucose were uniformly dispersed in 50 ml of anhydrous ethanol, a resulting mixture was ball-milled at a rotational speed of 400 r/min for 12 h, and a ball-milled powder material was dried to obtain a mixed precursor powder material. Then the precursor powder material was placed into a sintering furnace, an inert atmosphere was introduced, the temperature was increased to 600°C at a temperature rise rate of 2 °C/min, and the temperature was kept for 14 h, to obtain a carbon-coated lithium iron phosphate material.

0.1 mol of lithium carbonate, 0.1984 mol of ferrous oxalate, 0.2 mol of ammonium dihydrogen phosphate powder, 0.0008 mol of tetrabutyl titanate, and 0.015 mol of glucose were uniformly dispersed in 50 ml of anhydrous ethanol, a resulting mixture was ball-milled at a rotational speed of 400 r/min for 12 h, and a ball-milled powder material was dried to obtain a mixed precursor powder material. Then the precursor powder material was placed into a sintering furnace, an inert reducing atmosphere was introduced, the temperature was increased to 600°C at a temperature rise rate of 2 °C/min, and the temperature was kept for 14 h, to obtain a carbon-coated titanium-doped lithium iron phosphate material.

0.1 mol of lithium carbonate, 0.1988 mol of ferrous oxalate, 0.2 mol of ammonium dihydrogen phosphate powder, 0.0006 mol of ammonium metavanadate, and 0.015 mol of glucose were uniformly dispersed in 50 ml of anhydrous ethanol, a resulting mixture was ball-milled at a rotational speed of 400 r/min for 12 h, and a ball-milled powder material was dried to obtain a mixed precursor powder material. Then the precursor powder material was placed into a sintering furnace, an inert reducing atmosphere was introduced, the temperature was increased to 600°C at a temperature rise rate of 2 °C/min, and the temperature was kept for 14 h, to obtain a carbon-coated vanadium-doped lithium iron phosphate material.

### Example 1

### [Preparation of a positive electrode sheet]

The carbon-coated Ti-doped lithium iron phosphate material was used as a positive electrode active material, which was mixed with a conductive agent Super P and a binder polyvinylidene fluoride (PVDF) at a mass ratio of 97:1:2, then a solvent N-methylpyrrolidone was added, and a resulting mixture was well mixed to obtain a positive electrode slurry; the positive electrode slurry was uniformly applied onto both sides of positive electrode current collector aluminum foil, followed by drying, cold pressing, and slitting, to obtain a positive electrode sheet.

### [Preparation of a negative electrode sheet]

(1) A first active material (amorphous carbon-coated graphite, which is commercially available) was fully mixed with a conductive agent Super-P, a dispersion agent CMC, and a binder SBR at a mass ratio of 96.4:0.4:1.0:2.2 in an appropriate amount of deionized water, so as to form a uniform negative electrode slurry A1.
(2) A second active material (amorphous carbon-coated graphite, which is commercially available) was fully mixed with a conductive agent Super-P, a dispersion agent CMC, and a binder SBR at a mass ratio of 96.0:0.7:1.1:2.2 in an appropriate amount of deionized water, so as to form a uniform negative electrode slurry A2.
(3) The negative electrode slurry A1 was applied onto negative electrode current collector copper foil, and the negative electrode slurry A2 was applied onto A1, followed by drying, cold pressing, tab die-cutting, and slitting, to obtain a negative electrode sheet coated with two layers.

### [Preparation of an electrolyte solution]

In a glove box filled with argon (with water content < 10 PPM, and oxygen content < 1 ppm), ethylene carbonate (EC), ethyl methyl carbonate (EMC), and propylene carbonate (PC) were mixed at a mass ratio of 20:75:5 to obtain an electrolyte solution solvent, and then fully dried lithium salt LiPF₆ was added into the solvent for mixing, to prepare an electrolyte solution with a lithium salt concentration of 1 mol/L.

### [Separator]

A polyethylene film was used as a separator.

### [Preparation of a battery cell]

The positive electrode sheet, the separator, and the negative electrode sheet were stacked in sequence, with the separator being located between the positive electrode sheet and the negative electrode sheet to achieve a separation function, followed by winding to obtain a bare electrode assembly, and then a positive electrode tab and a negative electrode tab were welded to obtain an electrode assembly. The electrode assembly was assembled into a shell, and after the prepared electrolyte solution was injected into the shell, packaging, standing, forming, shaping, capacity testing, and the like were performed on a battery to finally prepare a lithium-ion battery.

In Examples 1 to 9 and Comparative Examples 1 to 3, Id/lg and/or D1/D2 are changed, while other conditions remain unchanged.

**Table 1**

| Numbering | Positive electrode | | | | Negative electrode | | | | | | Electrolyte solution | | Performance |
|---|---|---|---|---|---|---|---|---|---|---|---|---|---|
| | Positive electrode active material | LFP Raman spectrum Id/lg | Coating areal density of the positive electrode sheet mg/cm² | Compaction density of the positive electrode material layer g/cm³ | D1/D2 | Thickness of the first negative electrode material layer t1 µm | Thickness of the second negative electrode material layer t2 µm | t2/t1 | Porosity of the first negative electrode material layer | Porosity of the second negative electrode material layer | Ethylene carbonate content | Propylene carbonate content | 1000cls capacity retention rate after cycling at 25°C |
| Example 1 | | 1.1 | | | 1.01 | | | | | | | | 95.3% |
| Example 2 | | 1.1 | | | 1.03 | | | | | | | | 95.9% |
| Example 3 | | 1.1 | | | 1.06 | | | | | | | | 96.4% |
| Example 4 | | 1.1 | | | 1.08 | | | | | | | | 95.2% |
| Example 5 | | 1.1 | | | 1.10 | | | | | | | | 94.7% |
| Example 6 | | 0.6 | | | 1.06 | | | | | | | | 95.5% |
| Example 7 | LiFe_{0.992}Ti_{0.004}PO₄ | 0.9 | 22.1 | 2.5 | 1.06 | 72 | 72 | 1.0 | 26% | 32% | 20% | 5% | 96.0% |
| Example 8 | | 1.3 | | | 1.06 | | | | | | | | 95.0% |
| Example 9 | | 1.5 | | | 1.06 | | | | | | | | 94.2% |
| Comparative Example 1 | | 2.3 | | | 1.06 | | | | | | | | 88.4% |
| Comparative Example 2 | | 1.1 | | | 1.51 | | | | | | | | 88.7% |
| Comparative Example 3 | | 2.3 | | | 1.51 | | | | | | | | 86.8% |

It can be seen from Table 1 that, with the other conditions being fixed, when the carbon-coated lithium iron phosphate material with Id/Ig ≤ 1.5 is used as the positive electrode active material and the amorphous carbon-coated graphite with 1.0 < D1/D2 ≤ 1.1 is used as the negative electrode active material, on one hand, active lithium consumption during battery cycling is reduced, and on the other hand, the kinetic performance of the battery is improved. This can collaboratively reduce the active lithium consumption and electrochemical polarization of the battery, thereby improving the cycle life.

Compared with those in Example 3, in Examples 10 and 11, the positive electrode active material is changed, while other conditions remain unchanged.

**Table 2**

| Numbering | Positive electrode active material | 1000cls capacity retention rate after cycling at 25°C |
|---|---|---|
| Example 10 | LiFePO₄ | 94.3% |
| Example 11 | LiFe_{0.994}V_{0.003}PO₄ | 95.8% |

It can be seen from Table 2 and Example 3 that, when the other conditions are fixed, the use of the lithium iron phosphate doped with the Ti or V element can lower a lithium-ion transport barrier and improve a lithium-ion diffusion rate, thereby improving the kinetic performance of the cell and improving the cycling performance.

Compared with those in Example 3, in Examples 12 and 13, t1, t2, and the ratio thereof are changed, while other conditions remain unchanged.

**Table 3**

| Numbering | Thickness of the first negative electrode material layer t1 | Thickness of the second negative electrode material layer t2 | t2/t1 | 1000cls capacity retention rate after cycling at 25°C |
|---|---|---|---|---|
| Example 12 | 87 | 57 | 0.66 | 96.2% |
| Example 13 | 57 | 87 | 1.5 | 96.4% |

It can be seen from Table 3 that, when the other conditions are fixed, t2/t1 satisfies 2/3 ≤ t2/t1 ≤ 1.5, in which case the battery has a good cycle life.

Compared with those in Example 3, in Example 14, a porosity of a first active substance layer and a porosity of a second active substance layer are changed, while other conditions remain unchanged.

**Table 4**

| Numbering | Porosity of the first negative electrode material layer | Porosity of the second negative electrode material layer | 1000cls capacity retention rate after cycling at 25°C |
|---|---|---|---|
| Example 14 | 30% | 25% | 94.9% |

It can be seen from Table 4 and Example 3 that, when the other conditions are fixed, the porosity of the second negative electrode material layer is greater than the porosity of first negative electrode material layer. That is, the design of stepped porosity distribution with the porosities increasing from top to bottom facilitates the speeding-up of ion conduction on a surface of the negative electrode, finally improving the kinetics of the battery cell and improving the cycle life.

Compared with those in Example 3, in Examples 15 to 18, an ethylene carbonate content or a propylene carbonate content in the electrolyte solution is changed, while other conditions remain unchanged.

**Table 5**

| Numbering | Ethylene carbonate content | Propylene carbonate content | 1000cls capacity retention rate after cycling at 25°C |
|---|---|---|---|
| Example 15 | 15% | 5% | 95.0% |
| Example 16 | 25% | 5% | 95.7% |
| Example 17 | 20% | 1% | 96.2% |
| Example 18 | 20% | 8% | 94.2% |

It can be seen from Table 5 that, when the other conditions are fixed, the use of an electrolyte solution containing 15% to 25% of ethylene carbonate and/or containing 1% to 8% of propylene carbonate can improve a lithium salt dissolution electrolysis capability, enabling the electrolyte solution to have a sufficient conductivity, and thereby improving the cycle life of the battery.

Compared with those in Example 3, in Examples 19 to 22, a coating areal density of the positive electrode sheet and a compaction density of the positive electrode material layer are changed, while other conditions remain unchanged.

**Table 6**

| Numbering | Coating areal density of the positive electrode sheet mg/cm² | Compaction density of the positive electrode material layer g/cm³ | 1000cls capacity retention rate after cycling at 25°C |
|---|---|---|---|
| Example 19 | 19.5 | 2.5 | 96.7% |
| Example 20 | 26.6 | 2.5 | 95.5% |
| Example 21 | 22.1 | 2.38 | 96.5% |
| Example 22 | 22.1 | 2.7 | 95.2% |

It can be seen from Table 6 that, when the other conditions are fixed, the coating areal density of the positive electrode sheet being 19.5 mg/cm2 to 26.6 mg/cm2 allows to maintain the kinetic performance of the battery cell, enabling to obtain a good battery cell life. The compaction density of the positive electrode material layer being 2.38g/cm3 to 2.7 g/cm3 facilitates maintaining the energy density and reliability of the battery cell, thereby improving the cycle life of the battery.

Although the present application has been described with reference to the preferred embodiments, various improvements can be made thereto and components thereof can be replaced with equivalents without departing from the scope of the present application. Especially, provided that there is no structural conflict, the various technical features mentioned in each embodiment can be combined in any way. The present application is not limited to the specific embodiments disclosed herein, but includes all technical solutions falling within the scope of the claims.

## Claims

1. A battery cell, comprising an electrode assembly, the electrode assembly comprising a positive electrode sheet, a negative electrode sheet, and a separator; wherein the negative electrode sheet comprises a negative electrode current collector and a negative electrode material layer disposed on at least one side of the negative electrode current collector, the negative electrode material layer comprises a negative electrode active material, the negative electrode active material comprises amorphous carbon-coated graphite, and the amorphous carbon-coated graphite comprises a graphite core and an amorphous carbon coating layer on a surface of the graphite core, wherein an interplanar spacing of (002) crystal planes of the amorphous carbon is D1, an interplanar spacing of (002) crystal planes of the graphite core is D2, and D1 and D2 satisfy 1.0 < D1/D2 ≤ 1.1;
the positive electrode sheet comprises a positive electrode current collector and a positive electrode material layer disposed on at least one side of the positive electrode current collector, the positive electrode material layer comprises a positive electrode active material, the positive electrode active material comprises a carbon-coated lithium iron phosphate material, and in a Raman spectrum of the carbon-coated lithium iron phosphate material, the ratio of a peak intensity Id of a D peak to a peak intensity Ig of a G peak satisfies Id/Ig ≤ 1.5.

2. The battery cell according to claim 1, wherein in the Raman spectrum of the carbon-coated lithium iron phosphate material, the ratio of the peak intensity Id of the D peak to the peak intensity Ig of the G peak satisfies 0.9 ≤ Id/Ig ≤ 1.3.

3. The battery cell according to claim 1 or 2, wherein the negative electrode material layer comprises a first negative electrode material layer and a second negative electrode material layer, the first negative electrode material layer is disposed on at least one side of the negative electrode current collector, the second negative electrode material layer is disposed on a side of the first negative electrode material layer that is away from the negative electrode current collector, and the ratio of a thickness t2 of the second negative electrode material layer to a thickness t1 of the first negative electrode material layer satisfies 2/3 ≤ t2/t1 ≤ 1.5; and/or a porosity of the second negative electrode material layer is greater than a porosity of the first negative electrode material layer.

4. The battery cell according to any one of claims 1 to 3, wherein the thickness t1 of the first negative electrode material layer and the thickness t2 of the second negative electrode material layer are each independently selected from 57 µm to 87 µm; and/or the porosity of the first negative electrode material layer and the porosity of the second negative electrode material layer are each independently selected from 25% to 36%.

5. The battery cell according to any one of claims 1 to 4, wherein the lithium iron phosphate material comprises one or more doping elements selected from Ti, V, Mg, Zr, and Y.

6. The battery cell according to any one of claims 1 to 5, wherein in the positive electrode sheet, a coating areal density of the positive electrode sheet is 19.4 mg/cm² to 26.7 mg/cm².

7. The battery cell according to any one of claims 1 to 6, wherein a compaction density of the positive electrode material layer is 2.38 g/cm³ to 2.70 g/cm³.

8. The battery cell according to any one of claims 1 to 7, wherein the battery cell further comprises an electrolyte solution, the electrolyte solution comprising a solvent, and the solvent comprising cyclic carbonate.

9. The battery cell according to claim 8, wherein the solvent comprises ethylene carbonate (EC), and optionally, a mass of the ethylene carbonate accounts for 15% to 25% of a mass of the electrolyte solution.

10. The battery cell according to claim 8 or 9, wherein the solvent comprises propylene carbonate (PC), and optionally, a mass of the propylene carbonate accounts for 1% to 8% of the mass of the electrolyte solution.

11. A battery apparatus, comprising a plurality of battery cells according to any one of claims 1 to 10.

12. An energy storage apparatus, comprising a plurality of battery cells according to any one of claims 1 to 10 or a plurality of battery apparatuses according to claim 11, wherein the battery cell or the battery apparatus is configured to store or supply electric energy.

13. An energy storage system, comprising a power conversion apparatus and the energy storage apparatus according to claim 12, wherein the power conversion apparatus is configured to electrically connect a power generation apparatus and the energy storage apparatus.

14. A power consuming apparatus, comprising the battery cell according to any one of claims 1 to 10, the battery apparatus according to claim 11, the energy storage apparatus according to claim 12, or the energy storage system according to claim 13, wherein the battery cell or the battery apparatus is configured to store or supply electric energy.
